# EUROPEAN PATENT SPECIFICATION

(11) **EP 3 286 023 B1**
(45) Date of publication and mention of the grant of the patent: **17.03.2021**
(21) Application number: 16717794.8
(22) Date of filing: 12.04.2016
(51) Int. Cl.: B60C 23/00, B60C 23/18, B60C 1/00, B60C 3/00

(54) **HEAT INSULATING LAYER FOR PNEUMATIC TIRE**
HITZEISOLIERENDE SCHICHT FÜR EINEN REIFEN
PNEUMATIQUE COMPROTANT UNE COUCHE THERMIQUEMENT ISOLANTE

(30) Priority: 22.04.2015 US 201562151107 P
(43) Date of publication of application: 28.02.2018
(73) Proprietor: Compagnie Générale des Etablissements Michelin, 63000 Clermont-Ferrand (FR)
(72) Inventor: KOSE, Sadi, Greenville, South Carolina 29605 (US); LAWSON, Robert Cecil, Greenville, South Carolina 29605 (US); MORGAN, David Scott, Greenville, South Carolina 29605 (US)
(74) Representative: Casalonga
(86) International application number: PCT/US2016/027078
(87) International publication number: WO 2016/171951

(56) References cited:
- GB-A- 160 555
- US-A- 1 206 948
- US-A- 1 235 861
- US-A- 1 836 468
- US-A- 3 897 814

## Description

This application claims priority to, and the benefit of, U.S. Provisional Patent Application Serial No. 62/151,107, filed April 22, 2015, with the U.S. Patent Office,

### BACKGROUND OF THE INVENTION

### Field of the Invention

This invention relates generally to improving rolling resistance in pneumatic tires.

### Description of the Related Art

Pneumatic tires are characterized as having energetic losses during rolling, which is referred to as rolling resistance. As rolling resistance increases, so does energy loss and the need to increase driving forces to maintain a particular rate of rotation. Therefore, there is a need to reduce rolling resistance.

One cause of rolling resistance is hysteretic losses under deformation attributed to the characteristics of rubber (natural or synthetic). Hysteretic losses often result in increased heat. Accordingly, low rolling resistance tires are characterized as operating at lower temperatures.

It has been found, however, that rubber exhibits reduced hysteretic properties or losses at elevated temperatures above the rubber's glass transition temperature. Operating tires at elevated temperatures can impact tire durability, however. Therefore, the invention provides mechanisms for increasing a tire tread's operating temperature without causing thermal runout.

### SUMMARY OF THE INVENTION

Particular embodiments of the invention include a method of forming a tire, and, in more particular embodiments, a method of reducing the thermal cooling of a tread of a pneumatic tire. In exemplary embodiments of such methods, the pneumatic tire comprises: a tire carcass forming a toroid comprising a pair of sidewalls extending in a radial direction from a central opening and to a central portion extending laterally between the pair of sidewalls; a tire tread arranged annularly around the central portion and defining a ground-engaging side of the tire, the tire tread having a width defined by a pair of opposing lateral sides of the tread, the ground-engaging side extending annularly around an exterior side of In particular, the present invention relates to a pneumatic tire according to the preamble of claim 1, such as it is for example known from
- US 1 836 468 A,
- US 3 987 814 A,
- GB 160 555 A,
- US 1 235 861 A , or
- US 1 206 948 A.
the tire; and a tire thickness extending between the exterior side and an interior side of the tire. In such exemplary embodiments, the method comprises a step of applying a flexible heat insulating layer to the tire at a location radially inward from the tire tread and opposite the tire tread relative the tire thickness, the heat insulating layer having a thickness, a length extending annularly and substantially around the tire, and a width extending between the pair of opposing lateral sides of the tread, the heat insulating layer being characterized as having thermally insulating properties configured to maintain at least a portion of the tire tread at or above a desired elevated temperature greater than a glass transition temperature for any such portion of the tire tread under normal tire operating conditions, the heat insulating layer being characterized as having a low thermal conductivity. Such exemplary embodiments of such methods also include a step of bonding the heat insulating layer to the tire.

Particular embodiments of the invention include a pneumatic tire. In an exemplary embodiments, the pneumatic tire comprises a tire carcass forming a toroid comprising a pair of sidewalls extending in a radial direction from a central opening and to a central portion extending laterally between the pair of sidewalls. In such exemplary embodiments, the tire also includes a tire tread arranged annularly around the central portion and defining a ground-engaging side of the tire, the tire tread having a width defined by a pair of opposing lateral sides of the tread and the ground-engaging side extending annularly around an exterior side of the tire. Such exemplary embodiments of the tire also include a tire thickness extending between the exterior side and an interior side of the tire, and a flexible heat insulating layer attached to the tire at a location radially inward from the tire tread and opposite the tire tread relative the tire thickness, the heat insulating layer having a thickness, a length extending annularly and substantially around the tire, and a width extending between the pair of opposing lateral sides of the tread, the heat insulating layer being characterized as having thermally insulating properties configured to maintain at least a portion of the tire tread at or above a desired elevated temperature greater than a glass transition temperature for any such portion of the tire tread under normal tire operating conditions, the heat insulating layer being characterized as having a low thermal conductivity.

The foregoing and other objects, features, and advantages of the invention will be apparent from the following more detailed descriptions of particular embodiments of the invention, as illustrated in the accompanying drawings wherein like reference numbers represent like parts of the invention.

### DETAILED DESCRIPTION OF THE DRAWINGS

FIG. **1** is a partial front sectional view of a pneumatic tire having a heat insulating layer arranged radially inward from the tread, in accordance with an embodiment of the invention.
FIG. **2** is a front sectional view of a pneumatic tire along which a heat insulating layer is being applied using an applicator device comprising an extruder, in accordance with an embodiment of the invention.
FIG. **3** is a plot including a curve relating an energy loss coefficient (tan δ) of the tread to the tread operating temperature, in accordance with an exemplary embodiment of the invention.
FIG. **4** is a partial front sectional view of a pneumatic tire having a variable thickness heat insulating layer arranged radially inward of the tire tread and a heat insulating layer arranged along each sidewall, in accordance with another embodiment of the invention.

### DETAILED DESCRIPTION OF PARTICULAR EMBODIMENTS

Embodiments of the invention comprise methods for thermally insulating a tire tread during tire operation, so to reduce the thermal cooling of a tread of a tire, and in particular embodiments, methods for reducing the rolling resistance of a tire having a tread, where the tire comprises any pneumatic tire.

A pneumatic tire comprises a tire carcass forming a toroid comprising a pair of sidewalls extending in a radial direction from a central opening and to a central portion extending laterally between the pair of sidewalls. The sidewalls extend radially inward toward the rotational axis of the tire, and terminate at a bead location. The bead locations facilitate mounting of the tire upon or to a wheel, and either compressively engages, or has mechanical or adhesive bonding to, a wheel rim in such instances. A pneumatic tire also comprises a tire tread arranged annularly around the central portion and defining a ground-engaging side of the tire, the ground-engaging side extending annularly around an exterior side of the tire. The tire tread has a width defined by a pair of opposing lateral sides of the tread. The pneumatic tire has a thickness extending between the exterior side and an interior side of the tire. The tire may, or may not, include an inner liner forming an air-impermeable membrane or layer of elastomeric material arranged closest to the interior side of the tire and therefore forms at least a portion of the interior side of the tire. The inner liner commonly extends from and between the pair of sidewalls, and in certain instances, extends from and between the opposing bead locations of the pair of sidewalls. It is appreciated that the tire tread has a width extending between the pair of sidewalls, and the interior side has a corresponding undertread portion extending between the pair of sidewalls along the interior side and arranged opposite the tire tread relative the tire thickness along the central portion of the tire.

Particular embodiments of such methods comprise a step of applying a flexible heat insulating layer to the tire at a location radially inward of (below) the tire tread , the heat insulating layer having a thickness, a length extending annularly substantially around the tire, and a width extending between a pair of opposing lateral sides of the tread, the heat insulating layer being characterized as having thermally insulating properties configured to maintain at least a portion of the tire tread at or above a desired elevated temperature greater than a glass transition temperature for any such portion of the tire tread under normal tire operating conditions. In other words, the thermally insulating properties are configured to reduce the cooling rate of the tire tread during normal tire operation. By better maintaining an elevated operating temperature of the tire tread above a glass transition temperature of the tire tread during tire operation, in lieu of cooling to a lower temperature during tire operation, rolling resistance is reduced for the tire. In exemplary instances, the elevated temperature of the tire tread for a tire including a heat insulating layer is at least 1 deg. Celsius (° C), at least 5° C, or at least 10° C above the tire tread operating temperature for a tire not including a heat insulating layer. The operating temperature is taken as an average along the length of the tread and across the width of the tread, taken as an average along the length of the tread for a central 50% of the tread width, or taken as an average along the length of the tread for a width of the tread residing over the belt width. In more particular exemplary embodiments, when maintaining the elevated operating temperature of a tire tread containing a heat insulating layer above the tread operating temperature of a tire not including a heat insulating layer, the elevated temperature is at least 5° C or at least 10° C above the glass transition temperature of the tread.

As noted, the heat insulating layer is arranged at a location radially inward of the tire tread, that is, in other words, at a location below the tread. It is appreciated that the heat insulating layer may be applied to the tire after it has been assembled or as it is being assembled. It is also appreciated that the heat insulating layer may be applied to the tire before or after it has been cured, that is, when the tire is in a pre-cured or cured form.

In particular embodiments, the heat insulating layer is applied to the interior side of the tire. In certain instances, when the tire includes an inner liner layer, the heat insulating layer is arranged along the inner liner layer of the tire. The inner liner layer comprises an air-impermeable layer that is an inner-most layer, which defines a portion of an interior side of the tire. In other embodiments, the heat insulating layer is applied to the tire between a belt of the tire and an inner liner layer of the tire. The belt is arranged within the central portion of the tire, where the belt comprises one or more layers of spaced reinforcements having a length extending at least partially in a circumferential direction of the tire.

In having a length extending annularly substantially around the tire, the lengthwise extension of the heat insulating layer may be continuous or discontinuous around the tire. In extending between the pair of opposing lateral sides of the tread, the width of the heat insulating layer may have any desired width to optimize elevated tread temperatures and achieve a reduction in tire rolling resistance. In certain exemplary instances, in extending between the pair of opposing lateral sides of the tread, the heat insulating layer width extends substantially from bead to bead of the tire, that is, in other words, substantially across the full width of the tire, extending substantially from one tire bead, up the sidewall, across the tread width, down the opposing sidewall, and substantially to the opposing bead. In other instances, in extending between the pair of opposing lateral sides of the tread, the heat insulating layer has a width extending less than the full width of the tire. For example, in certain variations, in extending between the pair of opposing lateral sides of the tread, the heat insulating layer width substantially extends a full width of the tire tread, while in other variations the heat insulating layer width extends a partial width of the tire tread (that is, less than the tire tread width). In extending a partial width of the tire tread, in certain variations, the heat insulating layer width substantially extends a full width of a belt of the tire, while in other variations the heat insulating layer width extends a partial width of a tire belt. In extending a full width of the belt width, in particular instances, the heat insulating layer has a width substantially equal to or greater than the belt width. For example, in exemplary instances, the heat insulating layer is substantially equal to, or at least equal to, 100% or 110% of the belt width. In extending a partial width of the belt width, the heat insulating layer width extends up to 90% of the belt width and at least 10% of the belt width, for example. In other instances, the width of the heat insulating layer extends the width of the belt minus 10 millimeters (mm) on each side of the belt, such that the heat insulating layer width is equal to the belt width minus 20 mm. Also, in extending a partial width of the tread width or tread belt, it is appreciated that the heat insulating layer width may be substantially centered across the tread width or belt width or arranged off-center or asymmetrically biased across the tread width or belt width.

When arranging a heat insulating layer below the tire tread that extends less than the full width of the tire, additionally, or in the alternative, a heat insulating layer may be applied to each sidewall spaced apart from the tread and shoulder areas of the tire, and spaced apart from any heat insulating layer applied radially inward of the tire tread, if and when present. In particular embodiments, a heat insulating layer is arranged to extend substantially along the radial extent (that is, the radial height) of any sidewall, spaced apart from the shoulder forming a boundary between the corresponding (same) sidewall and the tire tread. In other embodiments, a heat insulating layer is arranged to extend from or radially below the max-section location of the sidewall and extend towards and in an area associated with the bead located at the bottom of the sidewall (that is, the radially innermost end of the sidewall). The area associated with the bead is also referred to as the bead zone. It is appreciated that any heat insulating layer arranged along a sidewall may be arranged circumferentially, in a continuous or discontinuous manner, along any sidewall. In particular variations, it is appreciated that only one sidewall includes one or more heat insulating layers or, on other variations, both sidewalls include one or more heat insulating layers, which may be the same or different in design.

While extending the substantial full width of the belt or tread width may maximize the maintenance of heat within the tire tread to reduce rolling resistance, providing a heat insulating layer having a width that is less than the belt or tread width and allowing the heat insulating layer width to be centered or asymmetrically biased relative to the belt or tread width allows tire designers to better control the maintenance of heat at any location of the tread. For example, it may be desirous to space the heat insulating layer apart from the sidewall and the shoulder area, which is the area where the central portion of the tire and the tread transition into a corresponding sidewall. It is also contemplated that in particular embodiments of extending between the pair of sidewalls, the heat insulating layer extends beyond the width of the belt or tread and along one or both sidewalls, which contemplates symmetrical and asymmetrical arrangement of the heat insulating layer across the interior side of the tire relative a widthwise centerline of the tire. Asymmetrical arrangements, for example, may be used to account for the effects of camber. Altering the thickness of the heat insulating layer, which may be a constant or variable thickness, also allows tire designers to better control the maintenance of heat at any location of the tread. It is appreciated that the thickness may vary in the widthwise or lateral direction of the heat insulating layer/tire, and/or in the lengthwise or longitudinal direction of the heat insulating layer/tire.

As suggested, the heat insulating layer has a thickness. To optimize and control the maintenance of elevated temperatures at any location along the tire tread for the reduction of tire rolling resistance, it is appreciated that the thickness of the heat insulating layer may comprise any thickness to achieve these purposes, where the thickness is at least determined based upon the material(s) employed to form the heat insulating layer and the amount of heat to be retained in a desired portion of the tread/tire. For example, in particular embodiments, the heat insulating layer is at least 0.5 mm thick, substantially 10 mm thick or less, or substantially 3.5 mm thick or less, and in more particular embodiments, is 0.5 mm to 3.5 mm thick, 0.5 to 10 mm thick, or 2 to 10 mm thick.

It is appreciated that, in certain instances, the heat insulating layer has a constant or variable thickness across the width and/or a length of the heat insulating layer and may be symmetric or asymmetric relative a widthwise centerline of the tire or of the heat insulating layer to facilitate such control and optimization of tire tread temperatures. For example, in particular instances, a variable thickness heat insulating layer has a reduced thickness under a tread void, such as a groove. In particular variations, the reduced thickness under a tread void is equal to zero and amounts to a void or separation in the heat insulating layer. By further example, a variable thickness heat insulating layer tapers to smaller thicknesses as the heat insulating layer approaches a lateral side of the tire tread or belt edge. In yet another example, a heat insulating layer arranged asymmetrically relative to a widthwise centerline of the tire tread is employed to account for any positive or negative camber imposed on the tire.

Optimizing and controlling the maintenance of elevated tread temperatures and reductions in rolling resistance is also influenced by the material or composition used to form the heat insulating layer. In particular embodiments, the heat insulating layer is characterized as having a low thermal conductivity, which, in one example, is quantified as ranging from and between 0.03 and 0.2 watt per kelvin-meters (W/Km), which operates to reduce the dissipation or transfer of heat from the tread generated during normal tire operation. To achieve or maintain a net reduction in rolling resistance, the rolling resistance achieved with the tread operating at an elevated operating temperature must exceed any increase in rolling resistance attributed to the hysteretic properties of the heat insulating layer.

Any material may be employed having the thermal properties identified herein for achieving the intended results of maintaining elevated tread temperatures above the glass transition temperature. It is contemplated that the flexible heat insulating layer maybe formed of a single material or multiple materials, and may be homogeneous or heterogeneous. For example, the heat insulating layer may be reinforced or may include one or more fillers to provide any desired properties, including such as to achieve a desired thermally insulating property, strength, or flexibility. In particular exemplary embodiments, a flexible heat insulating layer is characterized as being in a non-viscous, solid matter state, that is, in a state that is not a liquid, gas, or plasma state of matter, at least when in an operational form installed along the tire for use during tire operation. It is contemplated that a flexible heat insulating layer of a non-viscous, solid state may be formed of an elastomeric material in particular embodiments. It is also contemplated that the solid, non-viscous heat insulating layer may be installed in a non-solid state, such as in a liquid or viscous state, that later cures, hardens, or solidifies to form a solid state., or may be installed in a solid, non-viscous state. Moreover, a solid state does not necessarily mean that the heat insulating layer, in the solid, non-viscous state is non-porous, since in the solid state, the heat insulating layer may be non-porous or porous. For example, when porous, the heat insulating layer may comprise an open or closed cell form, such as a solidified foam or porous rubber. By further example, when non-porous, the heat insulating layer may comprise any non-porous rubber. In particular exemplary embodiments, a heat insulating layer of thickness of 0.5 to 3.5 mm may be formed of a higher density material, which is defined as having a density of at least 1.0 grams per centimeter cubed (g/cm³) or a density of 1.0 to 1.3 g/cm³ in one exemplary embodiment. For example, a higher density material may comprise unfilled or low filler rubber. Exemplary fillers include, without limitation, carbon black or silica. It is also appreciated that heat insulating layers of greater thickness exceeding 2 mm, or within the range of 2 to 10 mm may be formed of a lower density material defined as having a density of 1.0 g/cm³ or less or a density of 0.08 to 1.0 g/cm³, such as open or partially open cell polyurethane foam, for example. Please note, when referencing "rubber" in this document, the term "rubber" includes any natural or synthetic rubber, unless otherwise specified.

As a result of employing any embodiment of the heat insulating layer discussed herein, particular embodiments of such methods include operating the tire on a vehicle under normal tire operating conditions, such that at least a portion of the tire tread has an operating temperature that is maintained at or above the desired elevated temperature and such that the tire is characterized as having a reduced rolling resistance. In other words, by reducing the cooling rate of the tire tread, the tread is maintained at a higher temperature during tire operation, such that the elevated operating temperature reduces the hysteresis of the tire's elastomeric materials. It is appreciated that in performing the step of operating, operation is rotational operation of the tire in a mounted or installed arrangement on any desired vehicle, which may comprise, for example, a car, light truck, semi-truck, trailer, motorcycle, or bicycle. It is appreciated that a tread may be formed of a plurality of different elastomeric materials, including rubber, and which may be located at different locations across and/or within the tread. Accordingly, at least a portion of the tire tread having a desired elevated operating temperature above a tire tread of a tire not including a heat insulating layer and/or above a glass transition temperature may be accomplished by any one of multiple elastomeric materials of the tread. It is not uncommon for a tire tread to operate at different temperatures, such as across its width, for example, when the tire is operating at a positive or negative camber. Accordingly, it is understood that during tire operation, a tire tread may have a temperature variation when operating under normal conditions when at least a portion of the tire tread is maintained at or above a desired elevated temperature above a glass transition temperature. In such instances, the entire tread or at least a portion is maintained at or above the desired elevated temperature, even though the tread is characterized as having a variable temperature distribution. Tires are designed for certain anticipated conditions which include tire load, inflation pressure, rolling frequency and environmental temperature, where the anticipated conditions are referred to as normal tire operating conditions. It is appreciated that a portion of the tire tread may operate below the glass transition temperature, such as when the tire is operating in cold environments and/or when the tire is initially operating after a period of non-use, that is, before the tire reaches a normal operating temperature after a period of continued use, and especially when coupled with excessive tire inflation pressures and/or elevated rotational frequencies. In these abnormal conditions, the presence of a heat insulating layer can be employed to elevate the tire operating temperature above the glass transition temperature to not only reduce rolling resistance, but also to improve tire traction.

It is appreciated that the heat insulating layer is applied using any known manner for applying a layer of material onto a tire during or after tire construction and before or after the tire has been cured.

For example, in particular embodiments, the heat insulating layer is applied by extruding an uncured elastomeric material along the interior side of the tire at a location opposite the tire tread. It is appreciated that in certain instances, the extrusion has a width equal to a desired width of the heat insulating layer. In such instances, a single revolution is required to apply the heat insulating layer by extrusion. In other instances, the extrusion has a width that is less than a desired width of the heat insulating layer. In such instances, multiple revolutions are required when applying the extrusion to form the heat insulating layer. In applying the heat insulating layer using multiple revolutions, a multitude of separate strips may be applied to form the heat insulating layer and/or a single, continuous strip may be applied in a helical or cylindrical arrangement to form the heat insulating layer. After extruding the heat insulating layer onto the tire, a curing operation is performed to cure the heat insulating layer, which also operates to permanently bond the heat insulating layer to the tire. Any known manner of curing using any known device may be employed. For example, curing may be performed with the application of heat and/or pressure, which may be applied locally to the heat insulating layer directly or generally to the whole tire.

By further example, in other embodiments, the heat insulating layer is applied by spraying or painting an uncured material along the interior side of the tire at a location opposite the tire tread. After spraying the heat insulating layer onto the tire, a curing operation is performed to cure the heat insulating layer, which also operates to permanently bond the heat insulating layer to the tire. This curing operation may comprise the curing operation applied to an uncured tire (that is, a curing operation used to form the tire), or may comprise a separate curing operation, such as when the heat insulating layer has been applied to a cured tire. Any known manner of curing using any known device may be employed. For example, curing may be performed with the application of heat and/or pressure, which may be applied locally to the heat insulating layer directly or generally to the whole tire.

In yet other embodiments, the heat insulating layer is applied in a cured or solidified form, such that an adhesive layer is arranged between the heat insulating layer and the tire to bond the heat insulating layer to the tire. The heat insulating layer is applied using one or more strips of cured material, which, in particular embodiments, may be applied using a strip winding process. In particular instances, a single strip having a width equal to the desired width of the heat insulating layer is applied a substantially single revolution to form the heat insulating layer. Any such full-width strip may also be referred to as a sheet of material. In instances where the strip has a width less than the desired width of the heat insulating layer, the strip may be wound continuously around the tire multiple revolutions to form a spiral-shaped layer, where multiple windings of the strip are formed. In other embodiments, multiple separate strips are partially or fully wound around the tire in lieu of a single continuous strip to form the heat insulating layer. The windings may be slightly spaced apart in a side-by-side arrangement, or, in particular embodiments the windings are engaged in an abutting or overlapping side-by-side arrangement. With regard to the adhesive employed to attach the heat insulating layer to the tire, it is appreciated that any known adhesive employed in the tire industry for attaching cured elastomeric material to the tire may be employed.

It is appreciated that prior to applying the heat insulating layer to the tire, the interior side of the tire may be cleaned using any known solvent or cleaning technique to facilitate sufficient bonding of the heat insulating layer to the tire. Additionally or alternatively, a bonding agent may be applied to the interior side to also facilitate sufficient bonding of the heat insulating layer to the tire. It is also appreciated in any embodiment, regardless of the manner of forming and applying the insulating layer, multiple layers may be provided and applied.

Particular embodiments of such methods include a step of bonding the heat insulating layer to the tire. Bonding of the heat insulating layer may be achieved by any known manner using any know device or substance. For example, in certain instances, the heat insulating layer is bonded to the tire by a curing operation, where heat and/or pressure is applied to the heat insulating layer to facilitate bonding. It is appreciated that curing operations may occur while the tire is being molded and cured, or after the tire is molded and cured. In other variations, an adhesive or glue may be employed to attach and bond the heat insulating layer to the tire.

Particular embodiments of the methods and apparatus for curing an uncured polymeric form discussed above will now be described in further detail below in association with the figures filed herewith providing exemplary embodiments of the curing device for performing particular embodiments of the methods discussed above.

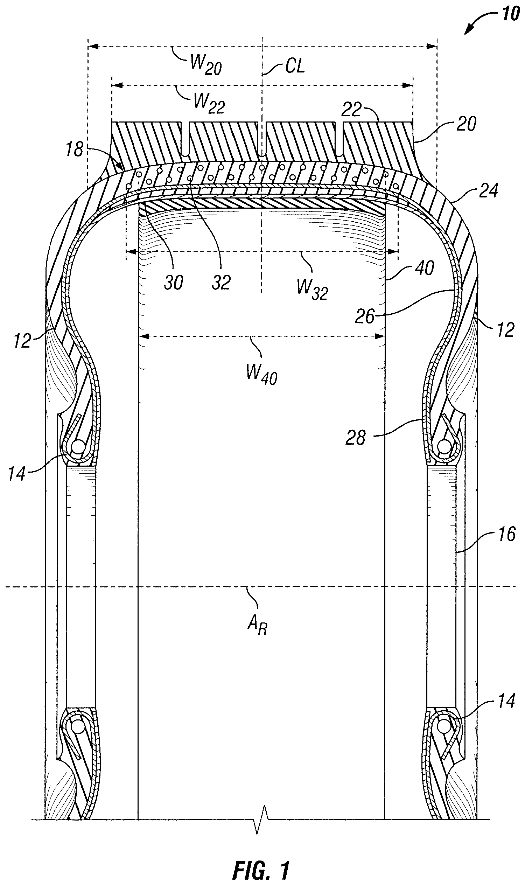

With reference to an exemplary embodiment shown in FIG. **1****,** an annular pneumatic tire **10** is shown in partial cross-section. The tire **10** includes a pair of sidewalls **12** extending in a radial direction from a central opening **16** and to a central portion **18** extending laterally between the pair of sidewalls. The sidewalls extend radially inward toward the rotational axis **A_{R}** of the tire, and terminate at a bead location **14.** A pneumatic tire also comprises a tire tread **20** arranged annularly around the central portion and defining a ground-engaging side **22** of the tire, the ground-engaging side extending annularly around an exterior side **24** of the tire. The pneumatic tire has a thickness extending between the exterior side **24** and an interior side **26** of the tire. The tire shown includes an inner liner **28** forming an air-impermeable membrane or layer of elastomeric material arranged closest to the interior side **26** of the tire and therefore forms at least a portion of the interior side of the tire. The inner liner extends from and between the opposing bead locations **14** of the pair of sidewalls **12.** It is appreciated that the tire tread **20** has a width **W₂₀** extending between the pair of sidewalls **12,** and the interior side **26** has a corresponding undertread portion **30** extending between the pair of sidewalls along the interior side and arranged opposite the tire tread relative the tire thickness along the central portion of the tire. The tire also includes a belt **32** arranged below the tread **20.** The belt **32** extends annularly around the tire and includes one or more layers of reinforcements. The belt **32** also has a width **W₃₂** extending between the pair of sidewalls **12.**

Also shown in FIG. **1** is a heat insulating layer **40** arranged along the undertread portion **30,** along the interior side **26** of the tire radially inward from the tire tread **20** and opposite the tire tread relative the tire thickness. The heat insulating layer **40** also extends annularly substantially around the tire, and has a width **W₄₀** extending between the pair of sidewalls **12.** In extending between the pair of sidewalls **12,** in the embodiment shown the heat insulating layer **40** has a width **W₄₀** that is less than the tread width **W₂₀** and the belt width **W₃₂.** As noted above, other widths are contemplated. By further example, with reference to FIG. **1****,** the heat insulating layer width **W₄₀** may be substantially equal to the ground-engaging side width **W₂₂** or the belt width **W₃₂**. The heat insulating layer **40** shown is formed of elastomeric material, and is characterized as having thermally insulating properties configured to maintain at least a portion of the tire tread above a glass transition temperature for any such portion. Exemplary thermally insulating properties are discussed above for achieving this end in accordance with particular embodiments.

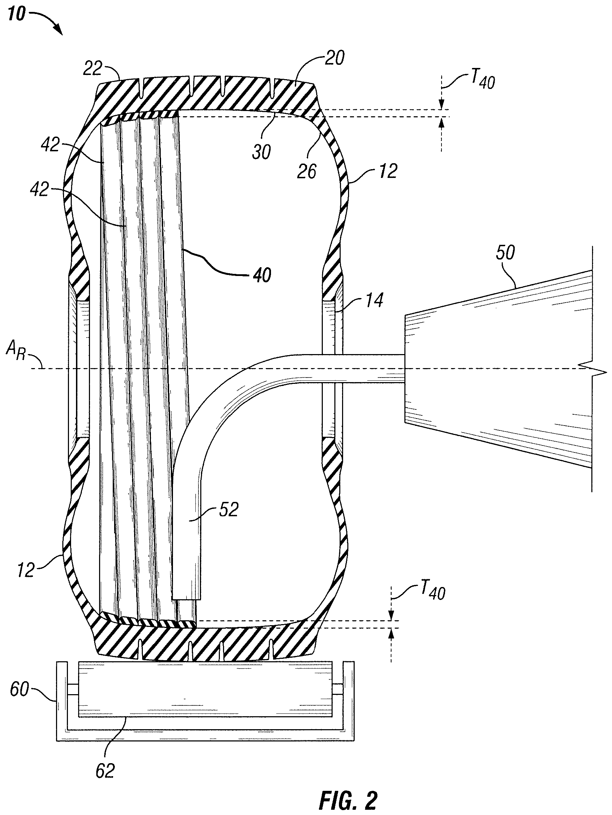

With reference to FIG. **2****,** an applicator device **50** is shown applying the heat insulating layer **40** along the interior side **24** of the tire in accordance with an exemplary embodiment. The heat insulating layer **40** is shown to have a thickness **t₄₀**. In the embodiment, the applicator device **50** is an extruder having an extension **52** protruding through the central tire opening **14** to a location for placement of a strip **42** to form the heat insulating layer **40.** As suggested above in association with the methods, the extruder may extrude a single, full width strip to form the insulating layer or multiple strips. In the exemplary embodiment shown, the extruder **50** extrudes a single continuous strip **42** multiple revolutions around the tire to form the insulating layer **40,** where the multiple revolutions form a helical arrangement. In other embodiments, as contemplated above in accordance with the methods, the applicator device may comprise any device for accomplishing any method step of forming or applying the insulating layer. For example, in other embodiments, the applicator device is a sprayer configured to spray the insulating layer onto the interior side of the tire.

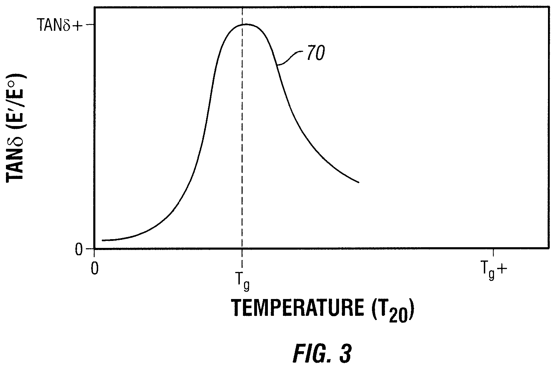

With reference now to FIG. **3****,** a plot is shown including a curve **70** representing the impact of temperature on the loss tangent of elastomeric tread material (that is, elastomers or elastomer compositions), where the loss tangent tan is indicative of rolling resistance performance. The loss tangent is also referred to also as "tan δ" or "tangent delta", and is equal to G"/G', where G" is the loss modulus and G' is the storage modulus. More specifically, curve **70** shows common behavior for elastomeric tread materials, where the loss tangent increases to a glass transition temperature **Tg** as the operating temperature **T₂₀** of the elastomeric tread material increases. After reaching the glass transition temperature **Tg,** the loss tangent decreases as the tread operating temperature **T₂₀** increases beyond the glass transition temperature. Because it is known that rolling resistance increases as the loss tangent increases, and decreases as the loss tangent decreases, by using a heat insulating layer as described herein to maintain an elevated tread temperature beyond the glass transition temperature **Tg,** a reduction in energy loss modulus may be achieved. By doing so, a reduction in rolling resistance is achieved at elevated tread temperatures. By doing so, any reduction in tread thickness to reduce rolling resistance may be avoided or minimized, which in turn would provide treads having a longer wear life by maintaining thicker treads.

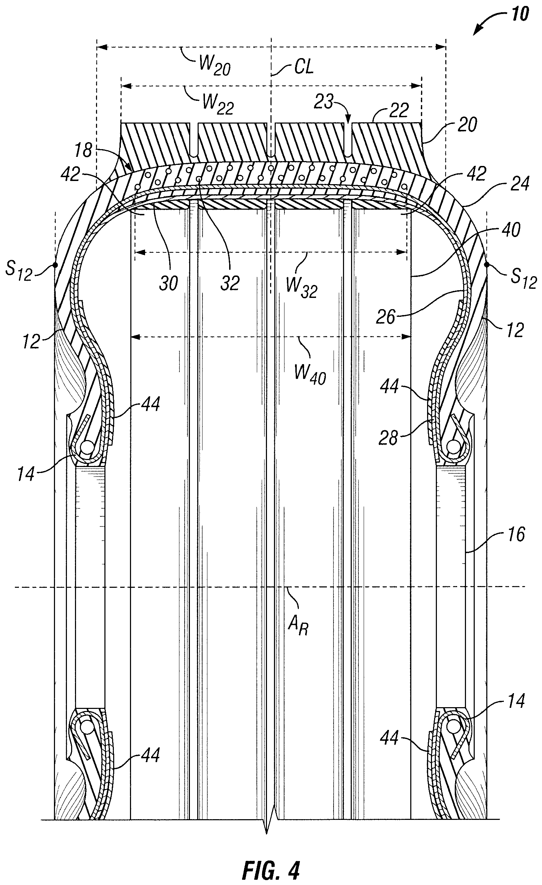

With reference to another exemplary embodiment shown in FIG. **4****,** an annular pneumatic tire **10** is shown in partial cross-section. In this embodiment, a variable thickness heat insulating layer **40** is provided. Specifically, it is shown that the opposing lateral sides of the heat insulating layer taper in thickness and that a reduced thickness of the heat insulating layer is arranged radially below particular voids **23** arranged in the tread. In the embodiment shown, the voids **23** are longitudinal grooves, although it is appreciated that the voids may comprise any exposed or submerged void arranged within the tread, including any longitudinal or lateral groove. As noted above, the reduced thickness is a reduction in thickness along the layer, which in the embodiment shown is a reduction to a zero thickness, and amounts to a void such that portions of the layer are spaced apart from other portions of the heat insulating layer. Also shown in the exemplary embodiment in FIG. **4** are heat insulating layers **44** arranged along each sidewall **12** spaced apart from the heat insulating layer **40** arranged below the tread **20.** Each layer **44** extends below or radially inward from a max-section location **S₁₂** of each sidewall **12** and towards each bead location **14,** although other arrangements are contemplated above. The max-section location is the point of the sidewall defining the maximum width of the tire, or the location at which a plane extending both perpendicular from the rotational axis of the tire and at a right angle (90 degrees) from the tire rotational axis is tangent to the associated sidewall.

The terms "comprising," "including," and "having," as used in the claims and specification herein, shall be considered as indicating an open group that may include other elements not specified. The terms "a," "an," and the singular forms of words shall be taken to include the plural form of the same words, such that the terms mean that one or more of something is provided. The terms "at least one" and "one or more" are used interchangeably. The term "single" shall be used to indicate that one and only one of something is intended. Similarly, other specific integer values, such as "two," are used when a specific number of things is intended. The terms "preferably," "preferred," "prefer," "optionally," "may," and similar terms are used to indicate that an item, condition or step being referred to is an optional (*i.e.,* not required) feature of the invention. Ranges that are described as being "between a and b" are inclusive of the values for "a" and "b" unless otherwise specified.

While this invention has been described with reference to particular embodiments thereof, it shall be understood that such description is by way of illustration only and should not be construed as limiting the scope of the claimed invention. Accordingly, the scope and content of the invention are to be defined only by the terms of the following claims. Furthermore, it is understood that the features of any specific embodiment discussed herein may be combined with one or more features of any one or more embodiments otherwise discussed or contemplated herein unless otherwise stated.

## Claims

1. A pneumatic tire (10) comprising:
a tire carcass forming a toroid comprising a pair of sidewalls (12) extending in a radial direction from a central opening (16) and to a central portion (18) extending laterally between the pair of sidewalls (12);
a tire tread (20) arranged annularly around the central portion (18) and defining a ground-engaging side (22) of the tire (10) , the tire tread (20) having a width (W₂₀) defined by a pair of opposing lateral sides of the tread (20) and the ground-engaging side (22) extending annularly around an exterior side (24) of the tire (10).
a tire thickness extending between the exterior side (24) and an interior side (26) of the tire (10);
**characterized in that** said pneumatic tire further comprises:
a flexible heat insulating layer (40) attached to the tire (10) at a location radially inward from the tire tread (20) and opposite the tire tread (20) relative the tire thickness, the heat insulating layer (40) having a thickness(T₄₀), a length extending annularly and substantially around the tire (10),and a width (W₄₀) extending between the pair of opposing lateral sides of the tread (20), the heat insulating layer (40) having thermally insulating properties configured to maintain at least a portion of the tire tread (20) at or above a desired elevated temperature greater than a glass transition temperature for any such portion of the tire tread (20) under normal tire (10) operating conditions, the heat insulating layer (40) s having a low thermal conductivity.

2. The tire (10) of claim 1, where the width (W₄₀) of the heat insulating layer (40) is equal to or less than the tread width (W₂₀).

3. The tire (10) of any one of claims 1 to 2, where the thermal conductivity of the heat insulating layer (40) is quantified as ranging from and between 0.03 and 0.2 watt per kelvin-meters (W/Km).

4. The tire (10) of any one of claims 1 to 3, where the heat insulating layer thickness (T₄₀) is equal to or less than 10 millimeters (mm).

5. The tire (10) of any one of claims 1 to 4, where the heat insulating layer thickness (T₄₀) is variable.

6. The tire (10) of any one of claims 1 to 5, where the heat insulating layer (40) is formed of a non-viscous material in a solid matter state in an operational form installed along the tire (10) for use during tire (10) operation.

7. The tire (10) of any one of claims 1 to 6, where the heat insulating layer (40) has a width (W₄₀) extending less than the substantial width of the tread width (W₂₀).

8. The tire (10) of claim 7, where the central portion (18) of the tire(10) includes a belt (32) comprising one or more layers of spaced reinforcements, and where the heat insulating layer (40) has a width (W₄₀) extending a substantial width of the belt (32) or less.

9. The tire (10) of any one of claims 1 to 8, where the heat insulating layer (40) is arranged along the interior side (26) of the tire (10).

10. The tire (10) of claim 9, where the heat insulating layer is arranged along an inner liner (28) layer of the tire (10), the inner liner (28) layer comprising an air- impermeable layer and defining a portion of an interior side (26) of the tire (10).

11. The tire (10) of any one of claims 1 to 10, where the central portion (18) the tire (10) includes a belt (32) comprising one or more layers of spaced reinforcements, where the heat insulating layer (40) is applied to the tire (10) between the belt (32) and an inner liner (28) layer of the tire (10), the inner liner (28) comprising an air-impermeable layer and defining a portion of an interior side (26) of the tire (10).

## Patentansprüche

1. Pneumatischer Reifen (10), umfassend:
eine Reifenkarkasse, die einen Toroid bildet, mit einem Paar von Seitenwänden (12), die sich in einer radialen Richtung von einer zentralen Öffnung (16) und
zu einem zentralen Abschnitt (18) erstrecken, der sich seitlich zwischen dem Paar von Seitenwänden (12) erstreckt;
eine Reifenlauffläche (20), die ringförmig um den zentralen Abschnitt (18) angeordnet ist und eine Bodeneingriffsseite (22) des Reifens (10) definiert, wobei die Reifenlauffläche (20) eine Breite (W₂₀) aufweist, die durch ein Paar gegenüberliegender lateraler Seiten der Lauffläche (20) definiert ist, und die Bodeneingriffsseite (22) sich ringförmig um eine Außenseite (24) des Reifens (10) erstreckt,
eine Reifendicke, die sich zwischen der Außenseite (24) und einer Innenseite (26) des Reifens (10) erstreckt;
**dadurch gekennzeichnet, dass** der Luftreifen weiterhin umfasst:
eine flexible wärmeisolierende Schicht (40), die an dem Reifen (10) an einer Stelle radial einwärts von der Reifenlauffläche (20) und gegenüber der Reifenlauffläche (20) in Bezug auf die Reifendicke angebracht ist, wobei die wärmeisolierende Schicht (40) eine Dicke (T₄₀) , eine Länge, die sich ringförmig und
im Wesentlichen um den Reifen (10) herum erstreckt, und eine Breite (W₄₀) aufweist, die sich zwischen dem Paar von gegenüberliegenden seitlichen Seiten der Lauffläche (20) erstreckt, wobei die wärmeisolierende Schicht (40) wärmeisolierende Eigenschaften aufweist, die so beschaffen sind, dass mindestens ein Teil der Reifenlauffläche (20) unter normalen Betriebsbedingungen des Reifens (10) auf oder über einer gewünschten erhöhten Temperatur gehalten wird, die größer ist als eine Glasübergangstemperatur für einen solchen Teil der Reifenlauffläche (20), wobei die wärmeisolierende Schicht (40) eine niedrige Wärmeleitfähigkeit aufweist.

2. Reifen (10) nach Anspruch 1, wobei die Breite (W₄₀) der wärmeisolierenden Schicht (40) kleiner oder gleich der Laufflächenbreite (W₂₀) ist.

3. Reifen (10) nach einem der Ansprüche 1 bis 2, wobei die Wärmeleitfähigkeit der Wärmedämmschicht (40) im Bereich von und zwischen 0,03 und 0,2 Watt pro Kelvin-Meter (W/Km) quantifiziert wird.

4. Reifen (10) nach einem der Ansprüche 1 bis 3, wobei die Dicke der Wärmedämmschicht (T₄₀) kleiner oder gleich 10 Millimeter (mm) ist.

5. Reifen (10) nach einem der Ansprüche 1 bis 4, wobei die Dicke der Wärmedämmschicht (T₄₀) variabel ist.

6. Reifen (10) nach einem der Ansprüche 1 bis 5, wobei die wärmeisolierende Schicht (40) aus einem nichtviskosen Material in einem Feststoffzustand in einer Betriebsform gebildet ist, die entlang des Reifens (10) zur Verwendung während des Betriebs des Reifens (10) installiert ist.

7. Reifen (10) nach einem der Ansprüche 1 bis 6, wobei die wärmeisolierende Schicht (40) eine Breite (W₄₀) aufweist, die sich weniger als die wesentliche Breite der Laufflächenbreite (W₂₀) erstreckt.

8. Reifen (10) nach Anspruch 7, wobei der zentrale Abschnitt (18) des Reifens (10) ein Band (32) umfasst, das eine oder mehrere Schichten von mit Abstand angeordneten Verstärkungen umfasst, und wobei die wärmeisolierende Schicht (40) eine Breite (W₄₀) aufweist, die sich über eine wesentliche Breite des Bandes (32) oder weniger erstreckt.

9. Reifen (10) nach einem der Ansprüche 1 bis 8, wobei die wärmeisolierende Schicht (40) entlang der Innenseite (26) des Reifens (10) angeordnet ist.

10. Reifen (10) nach Anspruch 9, wobei die wärmeisolierende Schicht entlang einer inneren Auskleidungsschicht (28) des Reifens (10) angeordnet ist, wobei die innere Auskleidungsschicht (28) eine luftundurchlässige Schicht umfasst und einen Teil einer Innenseite (26) des Reifens (10) definiert.

11. Reifen (10) nach einem der Ansprüche 1 bis 10, wobei der zentrale Abschnitt (18) des Reifens (10) ein Band (32) aufweist, das eine oder mehrere Schichten von mit Abstand angeordneten Verstärkungen umfasst, wobei die wärmeisolierende Schicht (40) auf den Reifen (10) zwischen dem Band (32) und einer inneren Auskleidungsschicht (28) des Reifens (10) aufgebracht ist, wobei die Innenauskleidung (28) eine luftundurchlässige Schicht umfasst und einen Teil einer Innenseite (26) des Reifens (10) definiert.

## Revendications

1. Pneu (10) pneumatique comprenant :
une carcasse de pneu formant un tore comprenant une paire de parois latérales (12) s'étendant dans une direction radiale à partir d'une ouverture centrale (16) et jusqu'à une partie centrale (18) s'étendant latéralement entre la paire de parois latérales (12) ;
une bande de roulement (20) de pneu agencée de manière annulaire autour de la partie centrale (18) et définissant un côté en prise avec le sol (22) du pneu (10), la bande de roulement (20) de pneu ayant une largeur (W₂₀) définie par une paire de côtés latéraux opposés de la bande de roulement (20) et le côté en prise avec le sol (22) s'étendant de manière annulaire autour d'un côté extérieur (24) du pneu (10) ;
une épaisseur de pneu s'étendant entre le côté extérieur (24) et un côté intérieur (26) du pneu (10) ;
**caractérisé en ce que** ledit pneu comprend en outre :
une couche calorifuge (40) flexible fixée au pneu (10) à un emplacement radialement vers l'intérieur à partir de la bande de roulement (20) de pneu et à l'opposé de la bande de roulement (20) de pneu par rapport à l'épaisseur de pneu, la couche calorifuge (40) ayant une épaisseur (T₄₀), une longueur s'étendant de manière annulaire et sensiblement autour du pneu (10), et une largeur (W₄₀) s'étendant entre la paire de côtés latéraux opposés de la bande de roulement (20), la couche calorifuge (40) ayant des propriétés calorifuges configurées pour maintenir au moins une partie de la bande de roulement (20) de pneu à ou au-dessus d'une température élevée souhaitée supérieure à une température de transition vitreuse pour toute partie de la bande de roulement (20) de pneu dans des conditions de fonctionnement de pneu (10) normales, la couche calorifuge (40) ayant une faible conductivité thermique.

2. Pneu (10) selon la revendication 1, où la largeur (W₄₀) de la couche calorifuge (40) est égale ou inférieure à la largeur (W₂₀) de bande de roulement.

3. Pneu (10) selon l'une quelconque des revendications 1 et 2, où la conductivité thermique de la couche calorifuge (40) est quantifiée dans une plage partant de et entre 0,03 et 0,2 watt par mètre-kelvin (W/Km).

4. Pneu (10) selon l'une quelconque des revendications 1 à 3, où l'épaisseur (T₄₀) de couche calorifuge est égale ou inférieure à 10 millimètres (mm).

5. Pneu (10) selon l'une quelconque des revendications 1 à 4, où l'épaisseur (T₄₀) de couche calorifuge est variable.

6. Pneu (10) selon l'une quelconque des revendications 1 à 5, où la couche calorifuge (40) est formée d'une matière non visqueuse dans un état de matière solide sous une forme fonctionnelle installée le long du pneu (10) pour une utilisation durant un fonctionnement de pneu (10).

7. Pneu (10) selon l'une quelconque des revendications 1 à 6, où la couche calorifuge (40) a une largeur (W₄₀) s'étendant sur moins que la largeur réelle de la largeur (W₂₀) de bande de roulement.

8. Pneu (10) selon la revendication 7, où la partie centrale (18) du pneu (10) comporte une ceinture (32) comprenant une ou plusieurs couches de renforts espacés, et où la couche calorifuge (40) a une largeur (W₄₀) s'étendant sur une largeur réelle de la ceinture (32) ou moins.

9. Pneu (10) selon l'une quelconque des revendications 1 à 8, où la couche calorifuge (40) est agencée le long du côté intérieur (26) du pneu (10).

10. Pneu (10) selon la revendication 9, où la couche calorifuge est agencée le long d'une couche de revêtement intérieur (28) du pneu (10), la couche de revêtement intérieur (28) comprenant une couche imperméable à l'air et définissant une partie d'un côté intérieur (26) du pneu (10) .

11. Pneu (10) selon l'une quelconque des revendications 1 à 10, où la partie centrale (18) du pneu (10) comporte une ceinture (32) comprenant une ou plusieurs couches de renforts espacés, où la couche calorifuge (40) est appliquée sur le pneu (10) entre la ceinture (32) et une couche de revêtement intérieur (28) du pneu (10), le revêtement intérieur (28) comprenant une couche imperméable à l'air et définissant une partie d'un côté intérieur (26) du pneu (10).
